# EUROPEAN PATENT SPECIFICATION

(11) **EP 3 254 844 B1**
(45) Date of publication and mention of the grant of the patent: **20.01.2021**
(21) Application number: 16746737.2
(22) Date of filing: 05.02.2016
(51) Int. Cl.: B32B 9/00, B32B 33/00

(54) **DECORATIVE SHEET AND DECORATIVE MEMBER PROVIDED WITH DECORATIVE SHEET**
DEKORFOLIE UND DEKORELEMENT MIT DEKORSCHICHT
FEUILLE DÉCORATIVE ET ÉLÉMENT DÉCORATIF POURVU D'UNE FEUILLE DÉCORATIVE

(30) Priority: 06.02.2015 JP 2015022589; 12.02.2015 JP 2015025787; 28.09.2015 JP 2015189909
(43) Date of publication of application: 13.12.2017
(73) Proprietor: Dai Nippon Printing Co., Ltd., Tokyo 162-8001 (JP)
(72) Inventor: UENO, Masanori, Tokyo 162-8001 (JP); IRIYAMA, Kouhei, Tokyo 162-8001 (JP); FUNABIKI, Chika, Tokyo 162-8001 (JP)
(74) Representative: Müller-Boré & Partner Patentanwälte PartG mbB
(86) International application number: PCT/JP2016/053590
(87) International publication number: WO 2016/125907

(56) References cited:
- JP-A- H01 188 334
- JP-A- H04 214 029
- JP-A- 2002 532 379
- JP-A- 2003 246 017
- JP-A- 2004 276 345
- JP-A- 2004 322 568
- JP-A- 2007 254 854
- JP-A- 2010 202 489
- JP-A- 2010 260 942
- JP-A- 2013 086 451

## Description

The present invention relates to decorative sheets and decorative members including the decorative sheets.

Products obtained by attaching a decorative sheet to an adherend such as a metal component (e.g., steel board), a resin component, or a wood component are typically used for interior and exterior parts of buildings (e.g., walls, ceilings, floors), joinery (e.g., window frames, doors, handrails, skirting boards, crown moldings, other moldings), surface decorative boards of cabinets for kitchen, furniture, light electrical appliances, and OA equipment, and interior and exterior parts of vehicles (for example, see Patent Literature 1). Some of these components that are exposed to direct sunlight when used, such as exterior parts, doors, and window frames, have a problem of warping due to temperature increase. In addition, the heat from direct sunlight is transferred through these components to the inside of the building, unfortunately increasing the temperature inside the building. This problem is significant in cases where the pigment, especially the black pigment, generally used in any of the layers constituting the decorative member, such as an adherend, a base, and a decorative layer, is made of carbon black which tends to absorb heat.

Some pigments have been developed to solve the problems caused by direct sunlight. Patent Literature 2, for example, discloses a heat-insulating decorative sheet utilizing perylene black as the pigment for a printed layer in the decorative sheet. Patent Literature 3, for example, discloses a heat-insulating decorative sheet utilizing azomethine-azo-based resin as a black pigment for a patterned layer. Also, known pigments include a Fe-Cr-based black pigment disclosed in Patent Literature 4, for example. Patent Literature 5 discloses a metallic oxide film and a member coated with the metallic oxide film.

Patent literature 6 discloses a surface-protection film which contains a polyurethane-type resin containing 0.01-2.0 mass % of complex oxide pigments which consist of Cu, Fe, and Mn with respect to the total mass of the polyurethane-type resin.

### CITATION LIST

Patent Literature 1: JP S59-178252 A
Patent Literature 2: JP 2013-237248 A
Patent Literature 3: JP 2014-43066 A
Patent Literature 4: JP 3468698 B
Patent Literature 5: JP 2007-254854 A
Patent Literature 6: JP2010-260942

Perylene black and azomethine-azo-based resin, which are pigments used for the printing layers in Patent Literatures 2 and 3, respectively, are organic pigments whose covering power and coloring power are lower than those of inorganic pigments. It is therefore difficult to achieve design with a small lightness value and muted colors. In such a case, design with a certain level of muted colors can be achieved by thickening the decorative layer, for example, but the design is unsatisfactory due to the use of an organic pigment. Such a thickened decorative layer also raises a problem that the contact (weather-resistant contact) between the decorative layer and another layer cannot be easily achieved when the decorative sheet and the decorative member are exposed to direct sunlight when used. Although the pigment disclosed in Patent Literature 4 is an inorganic pigment, restrictions on the use of such Fe-Cr-based black pigments have been increased because they contain chrome in their structures. A chrome-free material is therefore preferred for the pigment.

The present invention has been made in such a state of the art, and aims to provide a decorative sheet that exhibits excellent heat-insulating performance, weather-resistant contact, and design with muted colors, and a decorative member including the decorative sheet.

The inventors have made intensive studies to solve the above problems, and have found that the following invention can solve the problems. In other words, the present invention provides a decorative sheet having the following structure, and a decorative member including the decorative sheet.

[1] A decorative sheet including: a base sheet; a decorative layer; and a surface protective layer, wherein the decorative layer contains a composite oxide containing at least manganese and has a thickness of 0.7 to 13 µm, wherein a composite oxide content in the decorative layer based on the solids content is 30% to 75% by mass, and wherein the surface protective layer constitutes the outermost layer of the decorative sheet.
[2] The decorative sheet according to the item [1], further including a resin layer between the decorative layer and the surface protective layer.
[3] A decorative member including an adherend and the decorative sheet according to the above item [1] or [2], with the adherend and the base sheet of the decorative sheet facing each other.

The present invention can provide a decorative sheet that exhibits excellent heat-insulating performance, weather-resistant contact, and design with muted colors, and a decorative member including the decorative sheet.

### BRIEF DESCRIPTION OF DRAWINGS

Fig. 1 is a schematic cross-sectional view illustrating one example of a layer structure of the decorative sheet of the present invention.
Fig. 2 is a schematic cross-sectional view illustrating one example of a layer structure of the decorative member of the present invention.

### <Decorative sheet>

The decorative sheet of the present invention includes: a base sheet; a decorative layer; and a surface protective layer, wherein the decorative layer contains a composite oxide containing at least manganese and has a thickness of 0.7 to 13 µm, wherein a composite oxide content in the decorative layer based on the solids content is 30% to 75% by mass, and wherein the surface protective layer constitutes the outermost layer of the decorative sheet.

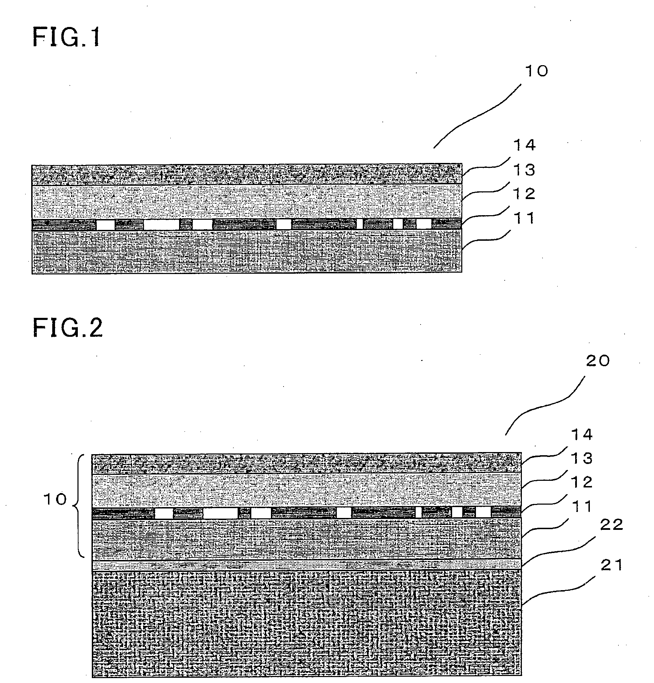

Hereinafter, the structure of the decorative sheet of the present invention is described in detail with reference to Fig. 1. Fig. 1 illustrates one example of a preferred layer structure of a decorative sheet 10 of the present invention. The decorative sheet 10 illustrated in Fig. 1 includes a base sheet 11, a decorative layer 12, a surface protective layer 14, and a resin layer 13 preferably disposed between the decorative layer 12 and the surface protective layer 14.

### (Base sheet)

The base sheet may be any base sheet generally used as a base sheet of a decorative sheet. For easy handleability, a base sheet formed of polyester resin or polyolefin resin is preferred.

Preferred examples of the polyester resin include polyethylene terephthalate (hereinafter, also referred to as "PET"), polybutylene terephthalate, polyethylene naphthalate, polyarylate, polycarbonate, ethylene terephthalate-isophthalate copolymers, and polyarylate. More preferred are polyethylene terephthalate and polybutylene terephthalate, and still more preferred is polyethylene terephthalate.

Preferred examples of the polyolefine resin include polyethylene (low density, medium .density, high density), polypropylene, polymethylpentene, polybutene, ethylenepropylene copolymers, and propylene-butene copolymers. More preferred are polyethylene and polypropylene.

The thickness of the base sheet may preferably be, for example, 20 to 130 µm, more preferably 30 to 100 µm, still more preferably 40 to 90 µm, in terms of the handleability.

The base sheet is preferably a colored resin sheet formed of a colored resin. A colored resin can favorably cover the surface hues, even varying surface hues, of the adherend in formation of a decorative member by attaching the decorative sheet to the adherend, leading to excellent design. The colored resin also enables color stabilization of the decorative layer as desired. For achievement of excellent heat-insulating performance, the base sheet is preferably a white sheet.

The colorant used for the above purpose may appropriately be selected to suit the application, and may color the base sheet in a transparent color or an opaque color, for example. Since the surface of the adherend generally needs to be covered, coloring in an opaque color is preferred.

Preferred examples of the colorant include inorganic pigments such as iron black, titanium white, antimony white, chrome yellow, titanium yellow, colcothar, cadmium red, ultramarine, and cobalt blue; organic pigments or dyes such as quinacridone red, isoindolinone yellow, and phthalocyanine blue; metallic pigments made of scaly foil pieces of a metal such as aluminum or brass; and pearl pigments made of scaly foil pieces of a material such as titanium dioxide-coated mica or basic lead carbonate. In the present invention, for achievement of excellent heat-insulating performance, the amount of carbon black (black ink) added as the colorant is preferably 5.0 parts by mass or less, more preferably 1.0 part by mass or less, still more preferably zero parts by mass, relative to 100 parts by mass of the resin constituting the base sheet. This is because carbon black (black ink) tends to absorb heat, and thus use of carbon black (black ink) for the decorative sheet causes the decorative sheet to easily absorb heat to deteriorate the heat-insulating performance. In the case where titanium oxide is used as a white pigment, titanium oxide may be in any known crystalline form of rutile, anatase, and brookite, and is preferably in the form of rutile in terms of excellent whiteness, weather resistance, and heat-insulating performance. Since titanium oxide can function as a photocatalyst to deteriorate the resin, titanium oxide is preferably surface-treated with a surface coating agent for stabilization of the photocatalytic function. Examples of the material of the surface coating agent include, but are not limited to, inorganic oxides such as silicon oxide, alumina, and zinc oxide. The method for coating titanium oxide with a surface coating agent may be, but is not particularly limited to, any known method.

The amount of the colorant added is preferably 1 to 30 parts by mass, more preferably 1 to 20 parts by mass, relative to 100 parts by mass of the resin constituting the base sheet, in order to avoid the case where the resin - content is significantly small in consideration of the weather resistance.

For the purposes such as enhancement of the interlayer contact between the base sheet and another layer and the adhesion between the base sheet and any of various adherends, a physical or chemical surface treatment such as an oxidation method or an unevenness method can be performed on one or both of the surfaces of the base sheet.

Examples of the oxidation method include corona discharge treatment, chrome oxidation treatment, flame treatment, hot-air treatment, and ozone-UV treatment. Examples of the unevenness method include sandblasting treatment and solvent treatment. Any of these surface treatments suited for the base used can appropriately be selected. Typically, corona discharge treatment is preferred in terms of the effect and operability, for example.

For enhancement of the interlayer contact between the base sheet and each layer, a treatment to form a primer layer or a back primer layer may be performed.

The base sheet may also contain inorganic filler as necessary. Examples of the inorganic filler include powders of calcium carbonate, barium sulfate, clay, talc, silica (silicon dioxide), or alumina (aluminum oxide). The amount of the inorganic filler added is generally 1 to 50 parts by mass relative to 100 parts by mass of the resin constituting the base sheet.

The base sheet may, as necessary, contain any other additives such as a foaming agent, flame retardant, lubricant, antioxidant, UV absorber, and light stabilizer.

### (Decorative layer)

The decorative layer provides decorativeness to the decorative sheet of the present invention, contains a composite oxide containing at least manganese, and has a thickness of 0.7 to 13 µm.

The term "composite oxide" as used herein refers to an oxide containing at least two metal elements. The expression "composite oxide containing at least manganese" refers to an oxide that contains manganese and at least one metal element other than manganese.

The composite oxide used for the decorative layer may be any composite oxide that functions as a pigment and contains at least manganese in its structure. For achievement of design with a small lightness value and muted colors and achievement of heat-insulating performance, preferred examples of the metal element other than manganese include group 2 elements such as calcium and barium; group 3 elements such as yttrium, lanthanum, praseodymium, and neodymium; group 4 elements such as titanium and zirconium; group 13 elements such as boron, aluminum, gallium, and indium; and group 15 elements such as antimony and bismuth. These metals may be used alone or in combination. In particular, group 2 elements, group 4 elements, and group 15 elements are preferred. Calcium, titanium, and bismuth are more preferred. Calcium and titanium are still more preferred. A composite oxide containing both calcium and titanium, i.e., a composite oxide containing manganese, calcium, and titanium is particularly preferred.

The structure of the composite oxide containing manganese may preferably be, but is not particularly limited to, a perovskite structure, an orthorhombic crystal structure, or a hexagonal crystal structure, for stability of the structure and achievement of excellent heat-insulating performance and design. A perovskite structure is more preferred.

The thickness of the decorative layer needs to be 0.7 to 13 µm. If the thickness of the decorative layer is less than 0.7 µm, the lightness value cannot be decreased, and thus design with muted colors cannot be achieved. If the thickness of the decorative layer is more than 13 µm, excellent weather-resistant contact cannot be achieved. For achievement of excellent design with muted colors and weather-resistant contact, the thickness of the decorative layer is preferably 1 to 10 µm, more preferably 3 to 8 µm.

The printing ink used for the decorative layer is a mixture obtained by appropriately mixing the composite oxide as described above and a binder, and the mixture may contain, as necessary, substances such as a colorant (e.g., pigment, dye), extender pigment, solvent, stabilizer, plasticizer, catalyst, and curing agent.

The binder may be, but is not particularly limited to, a curable resin such as a thermoplastic resin, one-part curing type resin, or two-part curing type resin. Examples the binder include urethane resin, acrylic resin, acrylic urethane resin, vinyl chloride/vinyl acetate copolymer resin, vinyl chloride/vinyl acetate/acrylic copolymer resin, chlorinated polypropylene resin, polyester resin, polyamide resin, butyral resin, polystyrene resin, nitrocellulose resin (flash cotton), and cellulose acetate resin. These resins may be used alone or in combination.

The colorant may appropriately be selected from the examples of the colorant for the base sheet as necessary. Here, too, use of no carbon black (black ink) is preferred.

For achievement of excellent weather-resistant contact, the composite oxide content in the decorative layer based on the solids content is 30% to 75% by mass, preferably 50% to 75% by mass. If the composite oxide content is within the above range, excellent heat-insulating performance and weather-resistant contact are achieved, the lightness value can be sufficiently decreased, and excellent design is achieved. The composite oxide content in the decorative layer is the same as the composite oxide content in the printing ink constituting the decorative layer based on the solids content.

The binder content in the decorative layer based on the solids content is preferably 25% by mass or higher, more preferably 25% to 70% by mass, still more preferably 25% to 50% by mass. The binder content in the decorative layer is the same as the binder content in the printing ink constituting the decorative layer based on the solids content.

The decorative layer may be a colored layer (what is called a solid colored layer) that covers the entire surface of the base sheet, may be a patterned layer on which various patterns are printed with ink and a printer, or may be a combination of these layers.

Examples of the patterns that can be printed on the decorative layer include woodgrain patterns, stone patterns resembling the surface of rocks such as marble patterns (e.g., travertine marble patterns), textile patterns resembling the cloth patterns or fabric-like patterns, tiling patterns, stacked brick patterns, and mixtures of these patterns (e.g., parquetry patterns, patchwork patterns). These patterns may be formed by, for example, multicolor printing with the general process colors of yellow, red, blue, and black, or multicolor printing using spot colors with printing plates of the respective colors of the patterns.

For achievement of design with a lightness value of 55 or less and dark muted colors and expression of the texture (tactile impression) obtained using the later-described recesses, woodgrain patterns providing realistic design and texture are preferred in the present invention. It is preferred to avoid use of carbon black (black ink) in terms of heat-insulating performance as described above. Even without carbon black, the decorative sheet of the present invention, including a decorative layer containing a given composite oxide and having a given thickness, can achieve excellent design even with dark colors and thereby exhibits both excellent heat-insulating performance and design.

### (Surface protective layer)

The surface protective layer is disposed directly on the decorative layer or on another layer (e.g., the later-described resin layer disposed as necessary on the decorative layer) and constitutes the outermost layer of the decorative sheet of the present invention. The surface protective layer gives surface properties including scratch resistance, abrasion resistance, and chemical resistance to the decorative sheet of the present invention and also to the decorative member including the decorative sheet. The surface protective layer is preferably made of a cured product of a resin composition containing a curable resin. The cured product of a curable resin composition can enhance the surface properties of the decorative sheet and also of the decorative member including the decorative sheet.

The curable resin used for formation of a surface protective layer is preferably a thermosetting resin (e.g., two-part curing type resin) or an ionizing radiation-curable resin, for example. The curable resin may be a hybrid resin containing these resins in combination, such as a hybrid resin containing an ionizing radiation-curable resin and a thermosetting resin in combination or a hybrid resin containing a curable resin and a thermoplastic resin in combination.

In order to increase the crosslink density of the resin constituting the surface protective layer and enhance the scratch resistance and abrasion resistance of the surface, the curable resin is preferably an ionizing radiation-curable resin. For elimination of use of a solvent in application and easy handleability, the curable resin is more preferably an electron beam-curable resin.

### (Ionizing radiation-curable resin)

The ionizing radiation-curable resin means a resin having quantum energy allowing crosslinking and polymerization of molecules in electromagnetic waves or charged particle beams, i.e., a resin that is crosslinked and cured when irradiated with UV light or electron beams, for example. Specifically, the ionizing radiation-curable resin can appropriately be selected from polymerizable monomers, polymerizable oligomers, and prepolymers conventionally used as ionizing radiation-curable resins.

Typically, the polymerizable monomers are preferably (meth)acrylic monomers containing radically polymerizable unsaturated groups in a molecule, particularly preferably polyfunctional (meth)acrylates. Here, the term "(meth)acrylate" means "acrylate or methacrylate". A polyfunctional (meth)acrylate may be any (meth)acrylate that contains two or more ethylenic unsaturated bonds in a molecule. The polyfunctional (meth)acrylates may be used alone or in combination.

Examples of the polymerizable oligomers include oligomers containing radically polymerizable unsaturated groups in a molecule, such as epoxy(meth)acrylate-based oligomers, urethane (meth)acrylate-based oligomers, polyester (meth)acrylate-based oligomers, and polyether (meth)acrylate-based oligomers.

The examples of the polymerizable oligomers also include polybutadiene(meth)acrylate-based oligomers containing a (meth)acrylate group in a side chain of a polybutadiene oligomer and having high hydrophobicity; silicone (meth)acrylate-based oligomers having a polysiloxane bond in the main chain; an aminoplast resin (meth)acrylate-based oligomers obtained by modifying aminoplast resin having many reactive groups in a small molecule; and oligomers containing cationic polymerizable functional groups in a molecule, such as novolac-type epoxy resin, bisphenol-type epoxy resin, aliphatic vinyl ether, and aromatic vinyl ether.

In the present invention, monofunctional (meth)acrylates may appropriately be used to decrease the viscosity as long as achievement of the purpose of the present invention is not hindered, in combination with substances such as the polyfunctional (meth)acrylate. The monofunctional (meth)acrylates may be used alone or in combination.

In order to achieve excellent scratch resistance and the durability thereof, and surface properties such as abrasion resistance and chemical resistance, the thickness of the surface protective layer is preferably 2 to 25 µm, more preferably 2 to 15 µm, still more preferably 2 to 10 µm.

The resin composition constituting the surface protective layer may contain various additives other than the above-mentioned ones in amounts that do not deteriorate the performance. Examples of the various additives include polymerization inhibitors, cross-linking agents, antistatic agents, adhesion improvers, antioxidants, levelling agents, thixotropic agents, coupling agents, plasticizers, antifoaming agents, fillers, and solvents.

### (Resin layer)

The resin layer is preferably disposed in terms of protection of the decorative layer and enhancement of the scratch resistance.

Preferred examples of the resin constituting the resin layer include the polyester resin and polyolefin resin used for the base sheet as described above, acrylic resin, polycarbonate resin, polyurethane resin, polystyrene resin, vinyl chloride resin, and vinyl acetate resin. For enhancement of the molding processability and the scratch resistance, polyester resin and polyolefin resin are preferred, and polyolefin resin is more preferred. Also for the same effect, both of the resins constituting the respective base sheet and resin layer are preferably polyolefin resins.

The resin layer may be disposed between the base sheet and the surface protective layer, and is preferably disposed between the decorative layer and the surface protective layer for protection of the decorative layer.

The resin layer may be transparent or opaque, and is preferably transparent in the case of being disposed between the decorative layer and the surface protective layer such that the decorative layer is more vividly perceptible. Here, the term "transparent" encompasses a colored and transparent state and a colored and translucent state as well as a colorless and transparent state. In the case where the resin layer is colored, preferred examples of the colorant used include those mentioned as the examples of the colorant used for the base sheet. Here, too, no carbon black (black ink) is preferably used.

The thickness of the resin layer is preferably 20 to 130 µm, more preferably 30 to 100 µm, still more preferably 40 to 90 µm. If the thickness of the resin layer is within the above range, the protective functions and scratch resistance of the decorative layer can be enhanced.

The resin layer may be subjected to physical or chemical surface treatment such as an oxidation method or an unevenness method on one or both of the surfaces for enhancement of the adhesion to each layer. Preferred examples of the physical or chemical surface treatments include the same treatments as the surface treatments for the base sheet. Also for enhancement of the adhesion between the resin layer and each layer, a treatment to form a primer layer or a back primer layer may be performed on the resin layer.

### (Adhesive layer)

The decorative sheet of the present invention can include an adhesive layer as necessary. In particular, in the case where the decorative sheet includes the resin layer, use of an adhesive layer is effective for enhancement of the adhesion between the resin layer and the decorative layer. The adhesive constituting the adhesive layer can be an adhesive typically used for a decorative sheet. The thickness of the adhesive layer is about 0.1 to 50 µm, preferably in the range of 1 to 30 µm, for achievement of sufficient adhesion.

Examples of the adhesive include, but are not particularly limited to, urethane-based adhesives, acrylic adhesives, epoxy-based adhesives, and rubber-based adhesives. In particular, urethane-based adhesives are preferred in terms of the adhesive power. Examples of such urethane-based adhesives include adhesives utilizing a two-part curing type urethane resin containing any of various polyol compounds such as a polyether polyol, polyester polyol, and acrylic polyol and any of various polyisocyanate compounds such as tolylene diisocyanate and hexamethylene diisocyanate. Acrylic resin-polyester-vinyl chloride/vinyl acetate copolymer-based resins are also preferred adhesives that can easily exert adhesion under heat and retain the adhesion strength even at high temperatures.

The adhesive layer can be formed using an adhesive composition containing materials such as the resins mentioned above by a known method such as a coating method.

### (Primer layer)

The decorative sheet of the present invention can include a primer layer and/or a back primer layer as necessary between any two of the layers for enhancement of the interlayer contact. For example, a decorative member having excellent interlayer contact can be obtained by disposing a primer layer as a back primer layer on the base sheet side between the adherend and the base sheet. Also for achievement of excellent scratch resistance of the decorative sheet of the present invention, it is effective to dispose a primer layer between the surface protective layer and another layer (e.g., in the case of disposing a resin layer, between the surface protective layer and the resin layer).

The primer layer is a transparent or translucent layer, and can be formed by, for example, using a resin mentioned as the binder resin used for the decorative layer. The thickness of the primer layer is typically about 0.5 to 20 µm, preferably 0.5 to 5 µm, more preferably 0.5 to 3 µm.

### (Recesses)

The decorative sheet of the present invention preferably has recesses at least in the surface protective layer. The decorative sheet of the present invention having recesses exhibits particularly excellent texture (tactile impression). The recesses may be formed at least in the surface protective layer, and some of the recesses may extend to the base sheet. For achievement of excellent texture (tactile impression), the recesses preferably include combinations of those formed only in the surface protective layer, those extending to the resin layer, those extending to the decorative layer, and those extending to the base sheet.

In the case where the layers mentioned herein such as the surface protective layer have the recesses, the thickness of each of the layers such as the surface protective layer refers to the thickness measured at a position where the recesses are not formed.

The maximum depth of the recesses is preferably 15% or higher but lower than 100%, more preferably 15% to 80%, still more preferably 25% to 80%, of the total thickness of the decorative sheet. The maximum depth of the recesses is also preferably 15 µm or greater, more preferably. 20 µm or greater, still more preferably 30 µm or greater. Such a maximum depth avoids breaking of the decorative sheet in recess processing such as embossing, avoids finishing with flattened recesses, and achieves excellent texture (tactile impression), thereby leading to excellent design.

Here, the maximum depth of the recesses was determined by the following method. That is, the heights of any 30 recesses were measured from the deepest points of the respective recesses to the surface of the surface protective layer using a surface roughness measuring device under the conditions of a cut-off value: 2.50 mm, cut-off filter: 2RC, and inclination correction method: straight line. The depth of the deepest recess was taken as the maximum depth.

The method for forming recesses in the surface protective layer is preferably, but is not particularly limited to, embossing in terms of easiness of the work. The embossing may be performed by a typical method utilizing a known sheetfed or rotary embossing machine.

The lightness value (the L* value in CIE L*a*b* Color Space developed by the International Commission on Illumination and defined in JIS Z 8730:2009) is preferably 55 or less, more preferably 45 or less, still more preferably 35 or less. If the lightness value is within the above range, design with dark and muted colors can be achieved. In particular, in the case where a woodgrain pattern is employed as the pattern, excellent design is achieved.

The "lightness value" as used herein refers to a value measured from the surface side of the decorative sheet of the present invention, i.e., from the surface protective layer side.

The solar reflectance of the decorative sheet of the present invention, calculated in accordance with JIS K 5602:2008, is preferably 20% or higher, more preferably 25% or higher, still more preferably 35% or higher in a wavelength range of 780 to 2500 nm. If the solar reflectance is within the above range, excellent heat-insulating performance is achieved. Here, the solar reflectance of the decorative sheet is calculated in accordance with JIS K 5602:2008 (Determination of reflectance of solar radiation by paint film, wavelength range: 780 to 2500 nm). Specifically, the spectral reflectance of the decorative sheet is measured by a spectrophotometer at an incident angle of 10°, and then the solar reflectance is calculated using the obtained data in accordance with JIS K 5602:2008 (Determination of reflectance of solar radiation by paint film, wavelength range: 780 to 2500 nm).

### (Method for manufacturing decorative sheet)

The method for manufacturing the decorative sheet of the present invention is described based on a method for manufacturing a decorative sheet including a base sheet, a decorative layer, a resin layer, and a surface protective layer in the given order, which is a preferred embodiment of the decorative sheet of the present invention. The decorative sheet of the present invention can be manufactured by the steps of, for example, (1) disposing a decorative layer on a base sheet; (2) disposing a resin layer on the decorative layer; and (3) applying a curable resin composition to the resin layer, curing the composition to form a surface protective layer, thereby producing a decorative sheet.

The step (1) is a step of disposing a decorative layer on a base sheet. The decorative layer is formed by applying the ink used for the decorative layer to form a desired color layer or pattern layer on the base sheet. The ink is applied by a known method such as gravure printing, bar-coating, roll-coating, reverse roll coating, or comma coating, preferably by gravure printing.

In the case where the base sheet is surface-treated, the surface treatment may be performed before application of the ink used for the decorative layer. In the case where a primer layer is disposed between the base sheet and the decorative layer, the primer layer may also be disposed before application of the ink used for the decorative layer. In the case where a back primer layer is disposed on the surface (back surface) of the base sheet opposite to the surface on which the decorative layer is disposed, the back primer layer may also be disposed before application of the ink used for the decorative layer. The primer layer can be formed by applying a resin composition constituting the primer layer by, for example, a known method such as gravure printing, bar-coating, roll-coating, reverse roll coating, or comma coating.

The step (2) is a step of disposing a resin layer on the decorative layer. The resin layer can be formed by applying an adhesive to the base sheet including the decorative layer to form an adhesive layer as necessary, and bonding and pressure-bonding a resin composition constituting the resin layer to the decorative layer or the adhesive layer by a method such as extrusion lamination, dry lamination, wet lamination, or thermal lamination.

The step (3) is a step of applying a curable resin composition to the resin layer, and curing the compositing to form a surface protective layer. The surface protective layer is formed by applying an ionizing radiation-curable resin composition containing the ionizing radiation-curable resin to the resin layer or the primer layer disposed on the resin layer as desired, and curing the composition. In the case where no resin layer is disposed, the surface protective layer may be formed by disposing the decorative layer on the base sheet, applying the curable resin composition to the decorative layer, and curing the composition.

The application of the resin composition for formation of the surface protective layer is performed to give a thickness after curing of typically about 1 to 20 µm, preferably by a known method such as gravure coating, bar-coating, roll coating, reverse roll coating, or comma coating, more preferably by gravure coating.

In the case where an ionizing radiation-curable resin composition is used for formation of the surface protective layer, an uncured resin layer formed by application of the resin composition is irradiated with ionizing radiation such as electron beams or UV light to be cured into a surface protective layer. Here, in the case where electron beams are used as the ionizing radiation, the accelerating voltage can appropriately be selected to suit the resin used or the thickness of the layer. It is still generally preferred to cure the uncured resin layer at an accelerating voltage of about 70 to 300 kV.

The irradiation dose is preferably selected to cause saturation of the crosslink density of the ionizing radiation-curable resin, and is typically selected in the range of 5 to 300 kGy (0.5 to 30 Mrad), preferably in the range of 10 to 50 kGy (1 to 5 Mrad).

The source of the electron beams can be, but is not particularly limited to, any of various electron beam accelerators such as a Cockcroft-Walton accelerator, van de graft accelerator, resonance transformer accelerator, insulated core transformer accelerator, linear accelerator, dynamitron accelerator, or high-frequency accelerator.

In the case where UV light is used as the ionizing radiation, UV light having a wavelength of 190 to 380 nm is emitted. The UV light source may be, but is not particularly limited to, a high pressure mercury lamp, low pressure mercury lamp, metal-halide lamp, or carbon arc lamp, for example.

In the case where a thermosetting resin composition is used in formation of the surface protective layer, the resin composition may be cured into the surface protective layer by a thermal treatment suited for the resin composition used.

The decorative sheet obtained as described above exhibits excellent heat-insulating performance, weather-resistant contact, and design with muted colors. Hence, the decorative sheet, in the form of a laminate with an adherend, is suited for use as a decorative member used for various applications including interior and exterior parts of buildings (e.g., walls, ceilings, floors), joinery (e.g., window frames, doors, handrails, skirting boards, crown moldings, other moldings), surface decorative boards of cabinets for kitchen, furniture, light electrical appliances, and OA equipment, and interior and exterior parts of vehicles.

### <Decorative member>

As illustrated in Fig. 2, a decorative member 20 of the present invention includes an adherend 21 and a decorative sheet 10 of the present invention, wherein the adherend 21 and the base sheet 11 of the decorative sheet 10 are disposed to face each other. Here, Fig. 2 is a schematic cross-sectional view illustrating one example of a preferred layer structure of the decorative member of the present invention.

### (Adherend)

Examples of the adherend include boards (flat boards, curved boards), three-dimensional products, and sheets (or films) made of various materials. Specific examples thereof include wood components used for boards, three-dimensional products, or other products, such as wood veneers, plywoods, particle boards, and wood fiberboards (e.g., medium density fiberboards (MDF)); metal components used for boards, steel boards, three-dimensional products, sheets, or other products, such as iron and aluminum; ceramic components used for boards, three-dimensional products, or other products, such as non-cement ceramic materials (e.g., glass, ceramics including pottery, gypsum) and non-pottery ceramic materials (e.g., autoclaved lightweight aerated concrete (ALC) boards); and resin components used for boards, three-dimensional products, sheets, or other products, such as acrylic resin, polyester resin, polystyrene resin, polyolefin-based resins (e.g., polypropylene), acrylonitrile-butadiene-styrene copolymer (ABS) resin, phenolic resin, vinyl chloride resin, cellulose-based resin, and rubber. These components may be used alone or in combination.

Any of the above components suited for the application may appropriately be selected in the present invention. For application of interior and exterior parts of buildings (e.g., walls, ceilings, floors) or joinery (e.g., window frames, doors, handrails, skirting boards, crown moldings, other moldings), wood components, metal components, resin components, and combinations of these components are preferred.

The thickness of the adherend may appropriately be selected to suit the application and the material, and is generally preferably 0.1 to 5 mm, more preferably 0.1 to 3 mm.

### (Adhesive layer)

As illustrated in Fig. 2, the adherend 21 and the decorative sheet 10 are preferably attached to each other with an adhesive layer 22 in between such that excellent adhesion is achieved.

The adhesive used for the adhesive layer may be, but is not particularly limited to, a known adhesive. Preferred examples of the adhesive include heat-sensitive adhesives and pressure-sensitive adhesives. The resin used for the adhesive constituting the adhesive layer is,' for example, at least one resin selected from acrylic resin, polyurethane-based resin, vinyl chloride-based resin, vinyl acetate-based resin, vinyl chloride-vinyl acetate copolymer resin, styrene-acrylic copolymer resin, polyester-based resin, and polyamide-based resin. A two-part curing-type polyurethane-based adhesive or polyester-based adhesive with a curing agent such as isocyanate is also applicable.

The adhesive layer may also contain a tackifier. The tackifier can appropriately be selected from acrylic, urethane, silicone, and rubber-based tackifiers.

The adhesive layer can be formed by applying the above resin in any applicable form such as a solution or an emulsion by a method such as gravure printing, screen printing, or reverse coating utilizing a gravure board, and then drying the resin.

The thickness of the adhesive layer may generally be, but is not particularly limited to, in the range of 1 to 100 µm. The adhesive layer having a thickness in this range can exhibit excellent adhesion.

### (Method for manufacturing decorative member)

The decorative member of the present invention can be manufactured through the step (4) of stacking the adherend and the decorative sheet of the present invention produced through the above steps (1) to (3), for example, with the base sheet of the decorative sheet and the adherend facing each other.

Preferred examples of the method of stacking the adherend and the decorative sheet include a lamination method of pressing the decorative sheet onto a plate-like adherend with an adhesive in between by a pressure roller; wrapping including pressure-bonding decorative sheets supplied onto the side surfaces of the adherend with an adhesive in between by rollers oriented in different directions; and vacuum molding including heating a decorative sheet fixed with a fixing frame to the given melting temperature of the decorative sheet by a heater with a silicone rubber sheet in between, pressing a vacuum molding die onto the decorative sheet softened by the heat, and sucking the air from the vacuum molding die using a device such as a vacuum pump to bring the decorative sheet into close contact with the vacuum molding die.

In the case where a hot-melt adhesive (heat-sensitive adhesive) is used in the lamination or wrapping process, the heating temperature, though it depends on the resin constituting the adhesive, is typically 160°C to 200°C, and is typically about 100°C to 130°C in the case of a reactive hot-melt adhesive. In the case of vacuum molding, the process is generally performed under heat, typically at about 80°C to 130°C, preferably at about 90°C to 120°C.

The decorative member obtained as described above can optionally be cut such that the surface or the end portion can be decorated as desired (e.g., grooved, chamfered) by a cutting machine such as a router or cutter. The decorative member can be used for various applications including interior and exterior parts of buildings (e.g., walls, ceilings, floors), joinery (e.g., window frames, doors, handrails, skirting boards, crown moldings, other moldings), surface decorative boards of cabinets for kitchen, furniture, light electrical appliances, and OA equipment, and interior and exterior parts of vehicles.

### EXAMPLES

The present invention is described in more detail based on examples. The present invention, however, is not limited to these examples.

### (Evaluation method)

### (1) Measurement of lightness value (L* value)

The L* value in CIE L*a*b* Color Space developed by the International Commission on Illumination and defined in JIS Z 8730-2009 of the decorative sheet obtained in each of the examples and comparative examples was measured by a spectrophotometer ("CM-3700d (model number)", Konica Minolta, Inc.).

### (2) Calculation of solar reflectance

The spectral reflectance of the decorative sheet obtained in each of the examples and comparative examples was measured from the surface protective layer side at an incident angle of 10° by a spectrophotometer ("UV-3100PC (model number)", Shimadzu Corporation). The solar reflectance in a wavelength range of 780 to 2500 nm was calculated using the obtained data in accordance with JIS K 5602:2008, and was evaluated based on the following criteria.
A: The solar reflectance was 45% or higher.
B: The solar reflectance was 35% or higher but lower than 45%.
C: The solar reflectance was 25% or higher but lower than 35%.
D: The solar reflectance was 15% or higher but lower than 25%.
E: The solar reflectance was lower than 15%.

### (3) Evaluation of weather-resistant contact

The decorative sheet obtained in each of the examples and comparative examples was subjected to the following weather resistance test. An accelerated weathering tester ("Eye Super UV Tester SUV-W131 (model number)", Iwasaki Electric Co., Ltd.) including a UV lamp ("M04-L21WB/SUV (model number)", Iwasaki Electric Co., Ltd.), a lamp jacket ("WJ50-SUV (model number)", Iwasaki Electric Co., Ltd.) and an illuminometer (trade name "UVD-365PD", Iwasaki Electric Co., Ltd.) was used. The decorative member was subjected to cycles of irradiation at a black panel temperature of 63°C with an illuminance of 60 mW/cm² for 20 hours and condensation for four hours.

After 50 hours, the contact of the surface protective layer of the decorative sheet was evaluated. Specifically, a piece of cellophane tape was attached to the surface protective layer of a 25-mm-width sample at room temperature (23°C) and a relative humidity of 50%. One end of the cellophane tape was peeled by a tensile strength tester (Tensilon tester) at a peeling speed of 100 mm/min so that the peel strength was measured. The peel strength was measured three times for each sample, and the average value thereof was evaluated based on the following criteria.
A: The peel strength was 15 N/25 mm or more.
B: The peel strength was 10 N/25 mm or more but less than-15 N/25 mm.
C: The peel strength was 5 N/25 mm or more but less than 10 N/25 mm.
D: The peel strength was less than 5 N/25 mm.

### (4) Evaluation of weather-resistant appearance

The decorative member obtained in each of the examples and comparative examples was subjected to a weather resistance test using a sunshine weather meter WEL-300 (Suga Test Instruments Co., Ltd.) at a black panel temperature of 63°C and in rain for 18 minutes in the 120-minute test. The decorative member was visually observed after 4000 hours to determine the presence or absence of appearance defects including lifting or dropping off of each layer such as a surface protective layer, and was evaluated based on the following criteria.
A: No significant appearance change was observed. That is, almost no appearance change was observed.
B: Slight appearance change was observed.
C: Significant appearance change was observed which can cause a problem.

### Example 1

A polypropylene resin sheet having been subjected to corona discharge treatment on each surface (white colored resin sheet with a thickness of 60 µm, containing 0.01 parts by mass of carbon black (10 parts by mass in combination with titanium oxide) as a pigment, relative to 100 parts by mass of polypropylene resin) was prepared as a base sheet. A woodgrain patterned decorative layer (thickness: 1 µm) was formed on one of the surfaces of the base sheet by applying a printing ink containing a two-part curing type acrylic-urethane resin as a binder and 70% by mass, based on the solids content, of a composite oxide (pigment A, composite oxide containing manganese, calcium, and titanium, "MPT-370 (trade name)", Ishihara Sangyo Kaisha, Ltd.) by gravure printing. A back primer layer (thickness: 2 µm) was formed on the other surface of the base sheet by applying a two-part curing type urethane-flash cotton mixed resin composition. To the decorative layer was applied a transparent polyurethane resin-based adhesive to form an adhesive layer (dried thickness: 3 µm). A transparent polypropylene resin was hot-melt-extruded onto the adhesive layer by a T-die extruder, so that a transparent resin layer (thickness: 80 µm) was formed.

The surface of the resin layer was subjected to corona discharge treatment, and then a primer layer (dried thickness: 1 µm) was formed thereon by applying a two-part curing type acrylic-urethane resin composition by gravure printing. A transparent electron beam-curable resin composition (electron beam-curable resin: trifunctional urethane acrylate) was applied to the primer layer by gravure coating (solids content: 3 g/m²), and the composition was dried to form an uncured resin layer. The uncured resin layer was cured by irradiation with electron beams (applied voltage: 125 KeV, 5 Mrad) at an oxygen concentration of 200 ppm, so that a surface protective layer (thickness: 3 µm) was formed. The workpiece was then embossed from the surface protective layer side to have uneven grain conduit patterns with recesses having a maximum depth of 30 µm, whereby a decorative sheet of Example 1 was obtained. The obtained decorative sheet was evaluated as described above. The evaluation results are shown in Table 1.

### Examples 2 to 5 and Comparative Examples 1 to 3

A decorative sheet of each of Examples 2 to 5 and Comparative Examples 1 to 3 was obtained by the same procedure as that in Example 1, except that the thickness and lightness value of the decorative layer, the composite oxide contained in the decorative layer and the amount thereof (%, based on solids content), and the base sheet in Example 1 were changed as shown in Table 1. The obtained decorative sheet was evaluated as described above. The evaluation results are shown in Table 1.

### Example 6

A decorative sheet and a decorative member were obtained by the same procedure as that in Example 1, except that the amount of titanium oxide in the polypropylene resin sheet having been subjected to corona discharge treatment on each surface was increased from that in Example 1 and the amount of the pigment used was 30 parts by mass. The obtained decorative sheet was evaluated as described above. The evaluation results are shown in Table 1.

**[Table 1]**

| | Decorative layer | | | Carbon black in base sheet | Lightness value (L* value) | Solar reflectance | Weather-resistant contact | Weather-resistant appearance |
|---|---|---|---|---|---|---|---|---|
| | Thickness (µm) | Pigment | Pigment content | | | | | |
| Example 1 | 1 | A | 70 | Contained | 50 | B | A | A |
| Example 2 | 5 | A | 70 | Contained | 40 | B | A | A |
| Example 3 | 5 | A | 70 | Not contained | 40 | A | A | A |
| Example 4 | 10 | A | 70 | Contained | 30 | B | B | A |
| Example 5 | 5 | B | 70 | Contained | 40 | C | A | A |
| Example 6 | 1 | A | 70 | Contained | 55 | A | A | B |
| Comaprative Example 1 | 0.5 | A | 70 | Contained | 60 | A | A | A |
| Comaprative Example 2 | 15 | A | 70 | Contained | 25 | B | C | A |
| Comaprative Example 3 | 5 | C | 70 | Contained | 60 | A | B | A |

| | | | | | | | | |
|---|---|---|---|---|---|---|---|---|
| Note) Pigment A: composite oxide containing calcium, titanium, and manganese ("MPT-370 (trade name)", Ishihara Sangyo Kaisha, Ltd.) Pigment B: composite oxide containing bismuth and manganese ("Black 6301 (trade name)", Asahi Kasei Kogyo Co., Ltd.) Pigment C: perylene black ("NBD-0744 (trade name)", Nikko Bics Co., Ltd.) | | | | | | | | |

The decorative sheets of the present invention were confirmed to exhibit design with muted colors (preferably with a lightness value of 55 or less), excellent heat-insulating performance owing to their high solar reflectance, and excellent weather-resistant contact. The decorative sheet of Example 3 including the base sheet containing no carbon black included the decorative layer containing no carbon black, and thus contained no carbon black at all. Yet, the decorative sheet was confirmed to exhibit a sufficiently small lightness value of 40, design with muted colors, and a higher solar reflectance than the decorative sheets of the other examples including a base sheet containing carbon black. Comparison between Examples 2 and 5 confirmed that the composite oxide (pigment A) containing calcium, titanium, and manganese had a higher solar reflectance and better heat-insulating performance. The decorative sheet of Example 6 containing a large amount of titanium oxide had a smaller resin content than the decorative sheets of the other examples, and was therefore inferior to the decorative sheets of the other examples including Example 1 in terms of the weather-resistant appearance.

In contrast, the decorative sheet of Comparative Example 1 including the decorative layer as thin as 0.5 µm and having a lightness value as large as 60 did not achieve design with muted colors. The decorative sheet of Comparative Example 2 including the decorative layer as thick as 15 µm had a lightness value of 25 and exhibited design with muted colors, but was insufficient in weather-resistant contact. The decorative sheet of Comparative Example 3 with the pigment C whose covering power and the coloring power were low had a lightness value as large as 60, failing to achieve design with muted colors.

The decorative sheet and decorative member of the present invention each exhibit excellent heat-insulating performance, weather-resistant contact, and design with muted colors. The decorative sheet and decorative member are suited for interior and exterior parts of buildings (e.g., walls, ceilings, floors), joinery (e.g., window frames, doors, handrails, skirting boards, crown moldings, other moldings), surface decorative boards of cabinets for kitchen, furniture, light electrical appliances, and OA equipment, and interior and exterior parts of vehicles. In particular, they are suited for use as an item exposed to direct sunlight when used, such as exterior parts, doors, and window frames, owing to their heat-insulating performance.

### REFERENCE SIGNS LIST

- 10: decorative sheet
- 11: base sheet
- 12: decorative layer
- 13: resin layer
- 14: surface protective layer
- 20: decorative member
- 21: adherend
- 22: adhesive layer

## Claims

1. A decorative sheet comprising:
a base sheet;
a decorative layer; and
a surface protective layer,
wherein the decorative layer contains a composite oxide containing at least manganese and has a thickness of 0.7 to 13 µm,
wherein a composite oxide content in the decorative layer based on the solids content is 30% to 75% by mass, and
wherein the surface protective layer constitutes the outermost layer of the decorative sheet.

2. The decorative sheet according to claim 1, which has a lightness value of 55 or less, measured by method JIS Z 8730:2009.

3. The decorative sheet according to claim 1 or 2,
wherein the composite oxide further contains at least one element selected from titanium, calcium, and bismuth.

4. The decorative sheet according to claim 3,
wherein the composite oxide further contains at least one element selected from titanium and calcium.

5. The decorative sheet according to any one of claims 1 to 4,
wherein the base sheet contains no carbon black.

6. The decorative sheet according to any one of claims 1 to 5,
wherein the decorative sheet contains no carbon black.

7. The decorative sheet according to any one of claims 1 to 6,
wherein the base sheet is a colored resin sheet.

8. The decorative sheet according to any one of claims 1 to 7,
wherein the surface protective layer is a cured product of an ionizing radiation-curable resin composition.

9. The decorative sheet according to any one of claims 1 to 8, further comprising a resin layer between the decorative layer and the surface protective layer.

10. A decorative member comprising:
an adherend; and
the decorative sheet according to any one of claims 1 to 9, with the adherend and the base sheet of the decorative sheet facing each other.

11. The decorative member according to claim 10,
wherein the adherend is at least one selected from wood components, metal components, and resin components.

## Patentansprüche

1. Dekorblatt, umfassend:
ein Grundblatt;
eine Dekorschicht; und
eine Oberflächenschutzschicht,
wobei die Dekorschicht ein Mischoxid, enthaltend mindestens Mangan, enthält und eine Dicke von 0,7 bis 13 µm aufweist,
wobei ein Mischoxidgehalt in der Dekorschicht, bezogen auf den Gehalt von Feststoffen, 30 bis 75 Massen-% beträgt, und
wobei die Oberflächenschutzschicht die äußerste Schicht des Dekorblatts bildet.

2. Dekorblatt nach Anspruch 1, welches einen Helligkeitswert von 55 oder weniger, gemessen mittels Verfahren JIS Z 8730:2009, aufweist.

3. Dekorblatt nach Anspruch 1 oder 2,
wobei das Mischoxid weiter mindestens ein Element, ausgewählt aus Titan, Calcium und Bismut, enthält.

4. Dekorblatt nach Anspruch 3,
wobei das Mischoxid weiter mindestens ein Element, ausgewählt aus Titan und Calcium, enthält.

5. Dekorblatt nach einem der Ansprüche 1 bis 4,
wobei das Grundblatt keinen Ruß enthält.

6. Dekorblatt nach einem der Ansprüche 1 bis 5,
wobei das Dekorblatt keinen Ruß enthält.

7. Dekorblatt nach einem der Ansprüche 1 bis 6,
wobei das Grundblatt ein farbiges Harzblatt ist.

8. Dekorblatt nach einem der Ansprüche 1 bis 7,
wobei die Oberflächenschutzschicht ein gehärtetes Erzeugnis einer durch ionisierende Strahlung härtbaren Harzzusammensetzung ist.

9. Dekorblatt nach einem der Ansprüche 1 bis 8, weiter umfassend eine Harzschicht zwischen der Dekorschicht und der Oberflächenschutzschicht.

10. Dekorelement, umfassend:
eine Haftfläche; und
das Dekorblatt nach einem der Ansprüche 1 bis 9, wobei die Haftfläche und das Grundblatt des Dekorblatts einander gegenüberliegen.

11. Dekorelement nach Anspruch 10,
wobei die Haftfläche mindestens eine, ausgewählt aus Holzkomponenten, Metallkomponenten und Harzkomponenten, ist.

## Revendications

1. Feuille décorative comprenant :
une feuille de base ;
une couche décorative ; et
une couche protectrice de surface,
dans laquelle la couche décorative contient un oxyde composite contenant au moins du manganèse et a une épaisseur de 0,7 à 13 µm,
dans laquelle une teneur en oxyde composite dans la couche décorative basée sur la teneur en solides est de 30 % à 75 % en masse, et
dans laquelle la couche protectrice de surface constitue la couche externe de la feuille décorative.

2. Feuille décorative selon la revendication 1, qui a une valeur de clarté de 55 ou moins, mesurée par le procédé JIS Z 8730:2009.

3. Feuille décorative selon la revendication 1 ou 2,
dans laquelle l'oxyde composite contient en outre au moins un élément sélectionné parmi le titane, calcium et bismuth.

4. Feuille décorative selon la revendication 3,
dans laquelle l'oxyde composite contient en outre au moins un élément sélectionné parmi le titane et calcium.

5. Feuille décorative selon l'une quelconque des revendications 1 à 4,
dans laquelle la feuille de base ne contient aucun noir de carbone.

6. Feuille décorative selon l'une quelconque des revendications 1 à 5,
dans laquelle la feuille décorative ne contient aucun noir de carbone.

7. Feuille décorative selon l'une quelconque des revendications 1 à 6,
dans laquelle la feuille de base est une feuille de résine colorée.

8. Feuille décorative selon l'une quelconque des revendications 1 à 7,
dans laquelle la couche protectrice de surface est un produit durci d'une composition de résine durcissable par rayonnement ionisant.

9. Feuille décorative selon l'une quelconque des revendications 1 à 8, comprenant en outre une couche de résine entre la couche décorative et la couche protectrice de surface.

10. Elément décoratif comprenant :
une partie adhérée ; et
la feuille décorative selon l'une quelconque des revendications 1 à 9, avec la partie adhérée et la feuille de base de la feuille décorative tournées l'une vers l'autre.

11. Elément décoratif selon la revendication 10,
dans lequel la partie adhérée est au moins une sélectionnée parmi des composants de bois, composants métalliques et composants de résine.
